# EUROPÄISCHE PATENTANMELDUNG

(11) **EP 0 864 343 A1**
(43) Veröffentlichungstag der Anmeldung: **16.09.1998**
(21) Anmeldenummer: 98102841.8
(22) Anmeldetag: 19.02.1998
(51) Int. Cl.: B01D 17/12

(54) **Einrichtung zur Sperre eines Zulaufs in einem Leichtflüssigkeitsabscheider**

(30) Priorität: 14.03.1997 AT 446/97
(71) Anmelder: Ortner, Heinrich, 9900 Lienz (AT)
(72) Erfinder: Ortner, Heinrich, 9900 Lienz (AT)
(74) Vertreter: Torggler, Paul Norbert

(57) **Zusammenfassung**

Eine Einrichtung zur Sperre eines Zulaufes in einem Leichtflüssigkeitsabscheider weist ein im wesentlichen vertikal verlaufendes Zulaufrohr (1) mit einer nach unten gerichteten Austrittsöffnung (3), einen Schwimmer (9) und ein mit dem Schwimmer (9) verbundenes Sperrelement (4) auf, das gegen eine innere Anlagefläche des Zulaufrohres (1) absenkbar ist. Die Anlagefläche ist innerhalb eines sich zur Austrittsöffnung (3) des Zulaufrohres (1) hin trichterförmig verjüngenden Bereiches (2) ausgebildet.

## Beschreibung

Die Erfindung betrifft eine Einrichtung Zur Sperre eines Zulaufes in einem Leichtflüssigkeitsabscheider, mit einem im wesentlichen vertikal verlaufenden Zulaufrohr, das eine nach unten gerichtete Austrittsöffnung unterhalb des Flüssigkeitsspiegels aufweist, mit einem Schwimmer und mit einem mit dem Schwimmer verbundenen, im Zulaufrohr vertikal beweglichen Sperrelement, das gegen eine Anlagefläche des Zulaufrohres absenkbar ist.

Eine derartige Absperreinrichtung ist beispielsweise der DE-A 28 38 559 zu entnehmen. Das Zulaufrohr tritt horizontal in das Abscheidebecken ein und ist stirnseitig verschlossen, sodaß das zu trennende Gemisch von Abwasser und Mineralölen od. dgl. durch die nach unten gerichtete Austrittsöffnung des Zulaufrohres in das Becken eintritt. Die Öffnung ist an einem nach innen geringfügig hochstehenden Rohrstutzen ausgebildet, dessen oberer Rand die Anlagefläche für das darüber angeordnete schwimmerbetätigte Sperrelement darstellt. Ein Haltestab des Sperrelementes erstreckt sich durch eine obere Öffnung des Zulaufrohres zum Schwimmer, wobei die Durchtrittsöffnung durch einen Faltenbalg gedichtet ist.

Das kegelstumpfartige Sperrelement verschließt das Zulaufrohr in Strömungsrichtung, wenn der Wasserstand im Abscheider ein bestimmtes minimales Niveau unterschreitet, wobei nachfließendes Abwasser, im Gegensatz zu von außen gegen die Strömungsrichtung sperrenden Klappen, den Schließdruck erhöht. Die Sperre bedeutet, da der Überlauf in den Abwasserkanal eine gleichbleibende Höhe aufweist, daß die obenschwimmende Leichtflüssigkeitsschicht jene maximale Dicke aufweist, die deren Entnahme erforderlich macht, um die weitere Funktion des Abscheiders zu gewährleisten. Nachdem dies erfolgt ist, wird das Sperrelement händisch angehoben, sodaß das Zulaufrohr wieder frei wird.

Da über den Zulauf nicht nur reine Flüssigkeit in den Abscheider eintritt, sondern auch Feststoffe vom Abwasser mitgeführt werden, setzen sich diese zwangsläufig rund um den am Zulaufrohr hochstehenden Rohrstutzen ab, bis dessen Rand erreicht ist. In diesem Moment ist der dichtende Verschluß der Austrittsöffnung nicht mehr möglich, da das Sperrelement auch auf den abgesetzten Feststoffen aufliegt, die natürlich keine glatte Dichtfläche bilden können.

Die Erfindung hat es sich nun zur Aufgabe gestellt, eine Absperreinrichtung der eingangs genannten Art zu schaffen, bei der eine Behinderung der Verschlußfunktion des Sperrelementes aufgrund von Feststoffablagerungen vermieden bzw. zumindest über längere Zeit hintangehalten wird.

Erfindungsgemäß wird dies dadurch erreicht, daß der die Anlagefläche für das Sperrelement umfassende Bereich des Zulaufrohres sich zur Austrittsöffnung hin trichterförmig verjüngt. Senkt sich das Sperrelement ab, so kommt es im konvergierenden Trichterbereich zur Anlage und verschließt die Austrittsöffnung, wobei sich der Schließdruck durch das nachfließende, sich aufstauende Abwasser erhöht. Es sind also keine Strömungshindernisse und Toträume gegeben, an bzw. in denen sich Feststoffe ablegen können, da die Feststoffe auch beim Wiederöffnen des Sperrelementes entlang der Trichterwände in den Abscheider mitgespült werden.

Der Querschnitt des Trichterbereiches kann eine beliebige Form aufweisen, also beispielsweise auch quadratisch sein, und das Sperrelement weist einen angepaßten Querschnitt auf. Bevorzugt sind beide im Querschnitt kreisrund, sodaß axiale Verdrehungen des mit dem Schwimmer verbundenen Sperrelementes möglich sind. Das Sperrelement ist weiters beispielsweise pyramiden- oder bevorzugt kegelstumpfförmig, und ist insbesondere in einer aufrechten Lage eingesetzt, sodaß die dann oben liegende, in Strömungsrichtung schräg abfallende Mantelfläche Ablagerungen vermeidet, die das Gewicht des Sperrelementes verändern können.

In einer weiteren bevorzugten Ausführung ist vorgesehen, daß das Sperrelement eine Unterseite aufweist, die zumindest im Randbereich mit einem Dichtstreifen aus einem elastisch nachgiebigen Material versehen ist. Der Dichtstreifen aus elastischem Material verbessert nicht nur die dichtende Anlage des Sperrelementes am Trichterbereich, sondern stellt diese bei einer leichten Schräglage des Sperrelementes sicher, die einbau- oder strömungsbedingt sich einstellen kann, wobei dies insbesondere für einen kreisrunden Schwimmerquerschnitt zutrifft.

Das Sperrelement kann zur besseren Anpaßbarkeit an die jeweiligen Gegebenheiten justierbar auf einem sich im Zulaufrohr im wesentlichen axial erstreckenden Haltestab angeordnet sein, da bevorzugt der Haltestab von einem das Zulaufrohr von unten umgreifenden Tragbügel mittig hochsteht, an dessen beiden freien Enden je ein Schwimmkörper vorgesehen ist.

Wenn der Haltestab am oberen Ende ein Gewinde aufweist, kann das Sperrelement von einer den Haltestab umschließenden Schraubhülse niedergehalten werden, an deren oberen Ende ein Werkzeugansatz ausgebildet ist.

In einer weiteren Ausführung ist vorgesehen, daß die freien Enden des Tragbügels mit Haken versehen sind, und am Zulaufrohr Einhängeösen ausgebildet sind. Hierdurch sind für Transport und Montage der Schwimmkörper und der Tragbügel mit den restlichen Teilen der Einrichtung verbindbar, wobei sich die Haken aus den Ösen selbsttätig aushängen, sobald der Flüssigkeitsstand im Abscheider eine bestimmte Höhe erreicht hat, sodaß die Schwimmkörper und das Sperrelement frei vertikal beweglich sind.

Für einen dichten oberen Abschluß des Zulaufrohres ist vorgesehen, daß das Zulaufrohr einen oberen, abnehmbaren Verschluß aufweist, der mittels eines Schwenkbügels mit dem Zulaufrohr dichtend verrastbar ist.

Nachstehend wird nun die Erfindung an Hand der Figuren der beiliegenden Zeichnungen näher beschrieben, ohne darauf beschränkt zu sein.

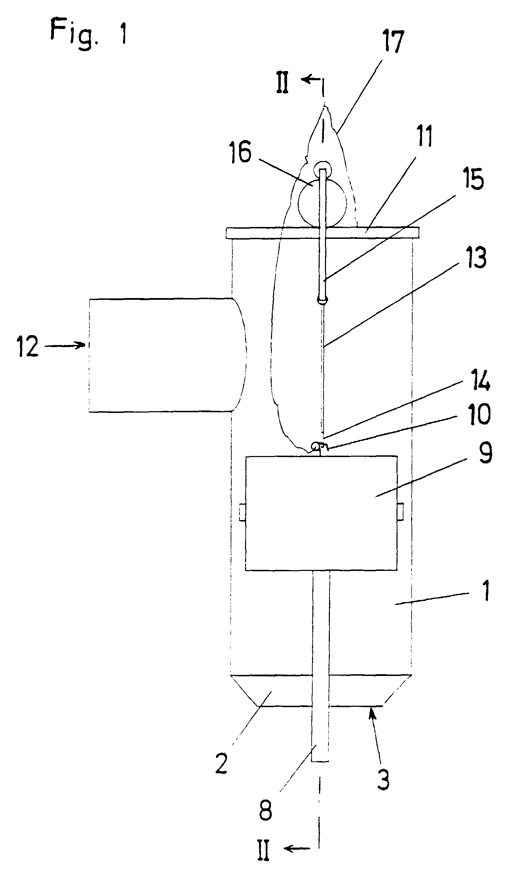

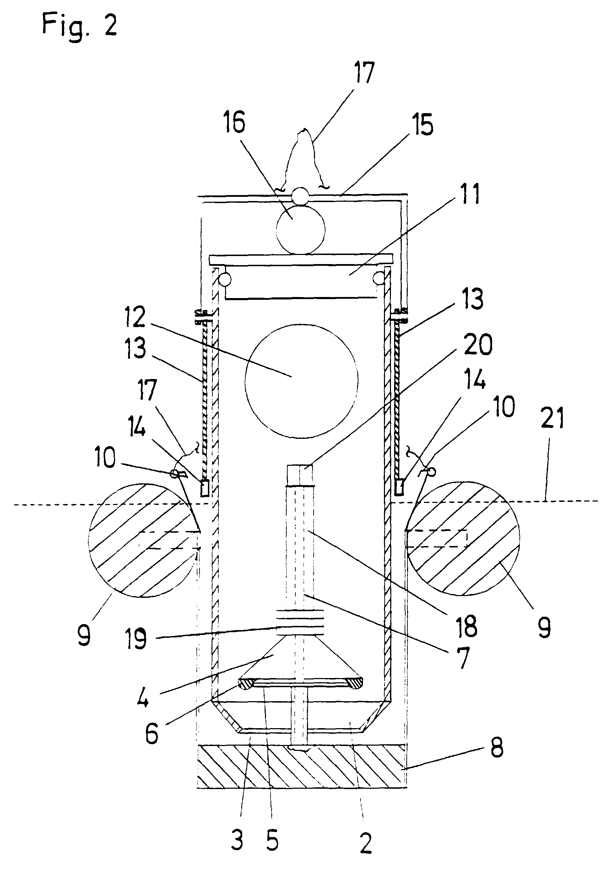

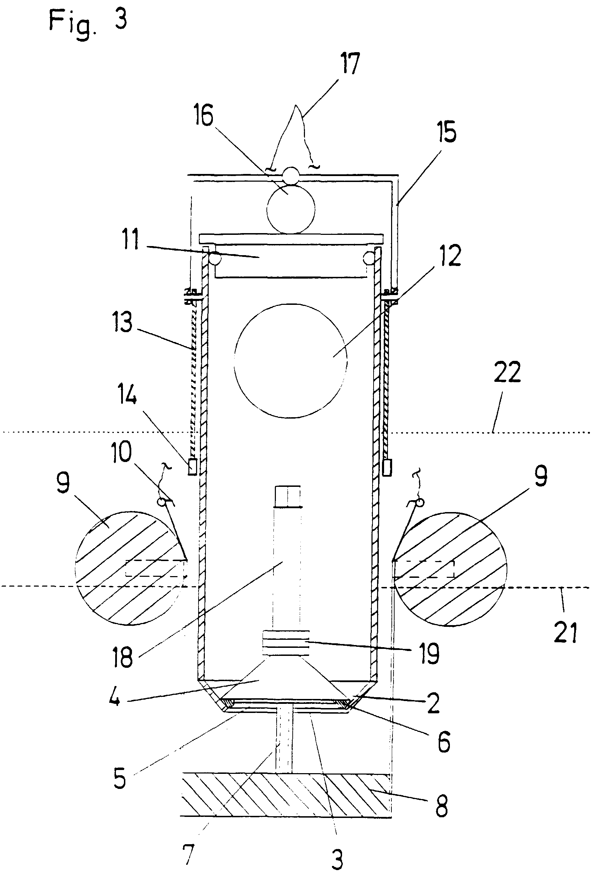

Die Fig. 1 zeigt eine Seitenansicht der erfindungsgemäßen Absperreinrichtung, die Fig. 2 einen Vertikalschnitt nach der Linie II-II der Fig. 1 in Offenstellung und die Fig. 3 einen Vertikalschnitt in Schließstellung.

Eine Zulaufabsperreinrichtung weist ein in einem Leichtflüssigkeitsabscheider vertikal anzuordnendes Zulaufrohr 1 auf, das mit einem horizontalen Rohrstutzen mit einer Eintrittsöffnung 12 und einem unteren, sich zur Austrittöffnung 3 hin verjüngenden Bereich 2 versehen ist. Oben ist das Zulaufrohr 1 durch einen abnehmbaren Deckel 11 dichtend verschlossen. Der Deckel 11 weist einen Griff 16 auf, über den ein am Griff 16 verrastender Klemmbügel 15 geschwenkt werden kann, der den Deckel 11 in Gebrauchsstellung sichert und fixiert. Im Inneren des Zulaufrohres 1 ist ein Sperrelement 4, das etwa kegelstumpfförmig ausgebildet ist, auf einem Haltestab 7 angeordnet. Der Haltestab 7 weist am oberen Ende ein Gewinde auf, und es ist eine Schraubhülse 18 vorgesehen, mittels der das Sperrelement 4, unter Zwischenschaltung von Justier- und/oder Tarierscheiben 19, fixiert ist. Die Schraubhülse 18 weist am oberen Ende einen Werkzeugansatz 20, beispielsweise einen Sechskantzapfen auf, über den die Schraubhülse 18 bei geöffnetem Deckel 11 betätigt werden kann.

Der Haltestab 7 steht mittig im wesentlichen vertikal von einem Tragbügel 8 hoch, der unterhalb der Austrittsöffnung 3 quer verläuft, und an dessen außerhalb des Zulaufrohres 1 sich nach oben erstreckenden Seitenschenkeln je ein Schwimmkörper 9 fixiert ist, der beispielsweise in der in Fig. 2 gezeigten Tiefe in das Wasser eintaucht, wobei der Wasserspiegel mit 21 bezeichnet ist.

Das Sperrelement 4 weist in dieser Offenstellung einen Abstand zum Trichterbereich 2 auf, sodaß das zulaufende Wasser durch die Austrittsöffnung 3 ungehindert in den Abscheider gelangt. Feststoffe können sich dabei dank der in Strömungsrichtung abfallenden Flächen weder am Trichterbereich 2 noch am Sperrelement 4 ablagern.

Je dicker die sich oberhalb des Wasserspiegels 21 sammelnde Leichtflüssigkeitsschicht wird, deren Flüssigkeitsspiegel mit 22 bezeichnet ist, umso mehr sinkt der Spiegel 21 nach unten, und die Eintauchtiefe der Schwimmkörper verändert sich, da sie ja auch von Leichtflüssigkeit bedeckt sind. Das zulässige Maximum der Leichtflüssigkeitsschicht zeigt Fig. 3. Sobald dies erreicht ist, muß der Zulauf gesperrt werden, um die Funktion des Abscheiders nicht zu beeinträchtigen. In dieser Stellung, in der die Leichtflüssigkeit in geeigneter Weise entfernt wird, liegt das Sperrelement 4 mit einem umlaufenden Dichtstreifen 6 aus elastischen Material am Trichterbereich 2 an und sperrt den Zulauf in Strömungsrichtung. Nachfließendes Abwasser staut und verstärkt diese Anpressung des Sperrelementes. Der Dichtstreifen 6 kann der Rand einer Dichtscheibe sein, die durch eine mittige Halteplatte 5 an der Unterseite des Sperrelementes 4 fixiert wird.

Sobald die Leichtflüssigkeit entfernt ist, soll das Abwasser wieder in den Abscheider einfließen. Hiefür muß das Sperrelement 4 vom Trichterbereich 2 angehoben werden, wobei anhaftende Feststoffe abgespült werden. Zum Hochheben des Sperrelementes 4 kann das gezeigte Seil 17 dienen, das beidseitig an den Enden 10 des Tragbügels 8 fixiert ist, und nach oben in den Griffbereich geführt ist. Auf diese Weise kann der Deckel 11 geschlossen sein, wenn das Sperrelement 4 geöffnet wird.

Die Enden 10 des Tragbügels 8 sind mit insbesondere ausfedernden Haken 10 versehen, die bei Transport und Montage der Absperreinrichtung in Ösen 14 eingehängt sind, die an äußeren Laschen 13 vom Klemmbügel 15 nach unten abstehen. Nach dem Einbau lösen sich die Haken 10 aus den Ösen 14 bei der Erstflutung des Abscheiders selbsttätig.

## Patentansprüche

1. Einrichtung zur Sperre eines Zulaufes in einem Leichtflüssigkeitsabscheider, mit einem im wesentlichen vertikal verlaufenden Zulaufrohr (1), das eine nach unten gerichtete Austrittsöffnung (3) unterhalb des Flüssigkeitsspiegels (21) aufweist, mit einem Schwimmer (9) und mit einem mit dem Schwimmer (9) verbundenen, im Zulaufrohr (1) vertikal beweglichen Sperrelement (4), das gegen eine Anlagefläche des Zulaufrohres (1) absenkbar ist, dadurch gekennzeichnet, daß der die Anlagefläche für das Sperrelement (4) umfassende Bereich (2) des Zulaufrohres (1) sich zur Austrittsöffnung (3) hin trichterförmig verjüngt.

2. Einrichtung nach Anspruch 1, dadurch gekennzeichnet, daß das Sperrelement (4) eine Unterseite aufweist, die zumindest im Randbereich mit einem Dichtstreifen (6) aus einem elastisch nachgiebigen Material versehen ist.

3. Einrichtung nach Anspruch 1 oder 2, dadurch gekennzeichnet, daß das Sperrelement (4) justierbar auf einem am Zulaufrohr (1) sich im wesentlichen axial erstreckenden Haltestab (7) angeordnet ist.

4. Einrichtung nach Anspruch 3, dadurch gekennzeichnet, daß der Haltestab (7) von einem das Zulaufrohr (1) von unten umgreifenden Tragbügel (8) mittig hochsteht, an dessen beiden freien Enden je ein Schwimmkörper (9) vorgesehen ist.

5. Einrichtung nach Anspruch 3 oder 4, dadurch gekennzeichnet, daß das Sperrelement (4) auf dem Haltestab (7) durch eine Schraubhülse (18) befestigt ist, an deren oberem Ende ein Werkzeugansatz (20) ausgebildet ist.

6. Einrichtung nach einem der Ansprüche 1 bis 5, dadurch gekennzeichnet, daß die freien Enden des Tragbügels (8) mit Haken (10) versehen sind, und am Zulaufrohr (1) Einhängeösen (14) ausgebildet sind.

7. Einrichtung nach einem der Ansprüche 1 bis 6, dadurch gekennzeichnet, daß das Zulaufrohr (1) einen oberen, abnehmbaren Verschluß (11) aufweist, der mittels eines Schwenkbügels (15) mit dem Zulaufrohr (1) dichtend verrastbar ist.
